# FASCICULE DE BREVET EUROPEEN

(11) **EP 2 676 127 B1**
(45) Date de publication et mention de la délivrance du brevet: **03.12.2014**
(21) Numéro de dépôt: 12709922.4
(22) Date de dépôt: 16.02.2012
(51) Int. Cl.: G01N 21/958, G01N 21/90, G01B 11/06

(54) **PROCEDE ET DISPOSITIF POUR DETECTER DES DEFAUTS DE REPARTITION DE MATIERE DANS DES RECIPIENTS TRANSPARENTS**
VERFAHREN UND VORRICHTUNG ZUR ERKENNUNG VON DEFEKTEN DER MATERIALVERTEILUNG IN TRANSPARENTEN BEHÄLTERN
METHOD AND DEVICE FOR DETECTING DEFECTS IN MATERIAL DISTRIBUTION IN TRANSPARENT CONTAINERS

(30) Priorité: 18.02.2011 FR 1151363
(43) Date de publication de la demande: 25.12.2013
(73) Titulaire: MSC&SGCC, 69390 Vourles (FR)
(72) Inventeur: LECONTE, Marc, F-69700 Loire Sur Rhone (FR); BATHELET, Guillaume, F-69280 Marcy L'etoile (FR)
(74) Mandataire: Thibault, Jean-Marc
(86) Numéro de dépôt international: PCT/FR2012/050339
(87) Numéro de publication internationale: WO 2012/110749

(56) Documents cités:
- EP-A1- 0 584 673
- EP-A1- 0 871 007
- EP-A1- 1 795 862
- EP-A2- 0 320 139
- DE-A1-102008 018 844
- FR-A1- 2 798 995
- GB-A- 2 195 178

## Description

La présente invention concerne le domaine technique de l'inspection optoélectronique de récipients à caractère transparent ou translucide, tels que des bouteilles, des pots ou des flacons, en vue de détecter des défauts de répartition de matière et en particulier des défauts d'épaisseur localisés appelés habituellement défauts de type mince.

L'objet de l'invention vise également à proposer une technique d'inspection permettant de déterminer la nature ou le type de défauts de répartition de matière présenté par les récipients en vue de remédier aux causes engendrées par de tels défauts.

Dans le domaine technique de la fabrication des récipients en verre, il est connu qu'il existe un risque que les récipients présentent une ou plusieurs zones localisées de mauvaise répartition de matière affectant l'esthétique ou plus grave, la résistance mécanique des récipients. Il est connu que les défauts de faible épaisseur ou « minces » se forment principalement dans des régions spécifiques du récipient qui présentent des rayons de courbure différents tels que l'épaule ou le jable du récipient. Pour détecter de tels défauts, il est connu par exemple par le brevet EP 0 320 139, de mesurer l'épaisseur du récipient en envoyant un faisceau lumineux sur la paroi du récipient en suivant un angle tel qu'une partie du faisceau lumineux est réfléchie par la face extérieure de la paroi et qu'une partie du faisceau est réfractée dans la paroi puis réfléchie par la face intérieure de la paroi. Les rayons réfléchis par les faces intérieure et extérieure de la paroi sont récupérés par une lentille de Fresnel afin d'être envoyés sur un capteur de lumière linéaire. L'épaisseur de la paroi du récipient est mesurée en fonction de la séparation, au niveau du capteur de lumière, entre les faisceaux réfléchis par les faces intérieure et extérieure de la paroi.

Le récipient est entraîné en rotation selon un tour pour mesurer son épaisseur selon l'une de ses sections droites transversales. De manière avantageuse, la section transversale d'inspection est située dans une zone du récipient présentant un grand risque de formation de minces tels que le jable ou l'épaule.

Le document EP 0 871 007 décrit une technique similaire pour mesurer l'épaisseur de la paroi et/ou de l'ovalisation d'un récipient. Dans le même sens, le document GB 2 195 278 décrit un procédé permettant de déterminer diverses particularités physiques d'un récipient en verre telles que l'épaisseur de verre, les irrégularités et les défauts susceptibles d'apparaître dans le récipient. Les documents DE 10 2008 018 844 et EP 1 795 862 décrivent d'autres installations pour mesurer l'épaisseur de la paroi d'un récipient transparent.

L'analyse des solutions antérieures connues conduit à constater qu'aucune d'entre elles ne permet de déterminer la nature ou le type de défauts de répartition de matière présentés par les récipients. En effet, la mesure réalisée est interprétée comme correspondant à un type de défaut par exemple à un mince alors qu'elle correspond en réalité à un autre type de défaut tel qu'un joint de moule.

La présente invention vise donc à remédier aux inconvénients de l'état de la technique en proposant une nouvelle technique d'inspection pour détecter à coup sûr des défauts de répartition de matière susceptibles d'apparaître sur des récipients transparents ou translucides.

Un tel objectif est atteint par le procédé d'inspection selon la revendication 1.

De plus, le procédé selon l'invention peut présenter en outre en combinaison au moins l'une et/ou l'autre des caractéristiques additionnelles suivantes :
- prendre en compte comme caractéristiques géométriques de distribution des mesures d'épaisseur, la surface, la longueur, la largeur, l'orientation, la rectitude, l'amplitude et/ou la pente,
- prendre en compte les caractéristiques géométriques des mesures d'épaisseur inférieures à une valeur critique d'épaisseur, pour caractériser la présence d'un défaut de type mince.
- prendre en compte l'orientation et/ou la rectitude de la distribution des mesures d'épaisseur pour caractériser la présence d'un défaut de type joint de moule décalé.
- prendre en compte l'orientation de la distribution des mesures d'épaisseur pour caractériser un défaut de type bouillon par une variation localisée et rapide de ladite distribution des mesures d'épaisseur.
- réaliser l'inspection pour une série de points d'inspection :
   - en envoyant un faisceau lumineux sous la forme d'une ligne lumineuse ayant une longueur déterminée selon la hauteur du récipient prise selon l'axe vertical,
   - en choisissant une série de points d'inspection selon la hauteur du récipient prise selon l'axe vertical, de manière pour chacun d'eux, à récupérer les faisceaux réfléchis par les faces intérieure et extérieure et à mesurer l'épaisseur de la paroi,
   - en déplaçant relativement par rapport au capteur de lumière, le récipient sur un tour,
   - et en choisissant un pas d'incrémentation de déplacement du récipient, de manière que pour chaque pas d'incrémentation de déplacement, à renouveler les opérations visant à déterminer l'épaisseur de la paroi en différents points d'inspection selon la hauteur du récipient,
- choisir entre 3 et 50 points d'inspection selon la hauteur du récipient et de préférence autour de 20 points d'inspection, selon un pas d'inspection compris entre 0,02 et 5 mm et de préférence autour de 1 mm selon la hauteur du récipient, avec un pas d'incrémentation en déplacement compris entre 0,5 et 5 mm et de préférence de l'ordre de 1 mm selon la circonférence du récipient,
- choisir les points d'inspection selon la hauteur du récipient correspondant à une zone d'inspection afin de couvrir au moins une zone de raccordement de la paroi présentant des rayons de courbure différents tels que l'épaule ou le jable du récipient,
- filtrer, interpoler ou corriger les signaux délivrés par le capteur de lumière selon la direction verticale et/ou horizontale du capteur de lumière et/ou dans le temps.

Un autre objet de l'invention est de proposer une installation permettant de déceler à coup sûr des défauts de répartition de matière.

Un tel objectif est atteint par l'installation d'inspection selon la revendication 10.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique d'une première variante de réalisation d'une installation d'inspection conforme à l'invention.
La **Figure 2** est une vue schématique montrant en coupe l'inspection d'un récipient par l'installation illustrée à la **Fig. 1****.**
La **Figure 3** est un exemple d'image obtenue par l'installation d'inspection illustrée aux **Fig. 1** et **2****.**
La **Figure 4** est une vue schématique montrant un autre exemple de réalisation d'une installation d'inspection conforme à l'invention.
Les **Figures 5** à **8** sont des figures illustrant différentes répartitions d'épaisseur correspondant à un défaut respectivement de type mince, un joint de moule décalé, à un bouillon et une ailette.
La **Figure 9** est une représentation de la distribution d'épaisseurs sur une hauteur déterminée et sur 360° d'un récipient.

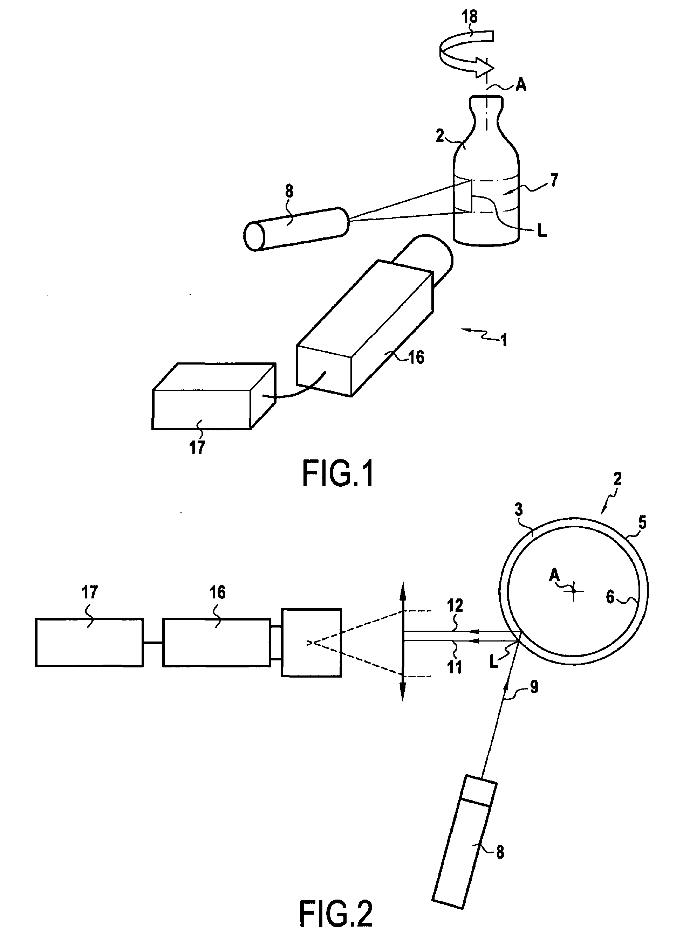

Les **Fig. 1** à **3** illustrent un premier exemple de réalisation d'une installation **1** permettant de déceler des défauts de répartition de matière sur des récipients transparents ou translucides **2** présentant un axe central **A.** Tel que cela ressort plus précisément de la **Fig. 2****,** chaque récipient **2** présente une paroi de révolution **3** délimitée entre une face extérieure **5** et une face intérieure **6**.

Conformément à l'invention, l'installation **1** est adaptée pour détecter des défauts de répartition de matière dans la paroi **3** des récipients **2.** Dans le cas d'un récipient en verre, l'installation **1** vise à détecter les défauts de mauvaise répartition du verre. A titre principal, l'installation **1** permet de détecter en tant que défaut de répartition de matière, un défaut de type mince. L'installation **1** permet également de détecter en tant que défaut de répartition de matière, les joints de moule décalés jusqu'à ailette, les bouillons de formage et bouillons d'affinage (ou puce), picots, plis, arrachés, peau de verre granité, collé au poinçon.

De manière avantageuse, l'installation **1** est adaptée pour observer une zone ou une région d'inspection **7** s'étendant sur toute la circonférence du récipient et présentant une hauteur prise selon l'axe central **A** englobant toute la zone dans laquelle sont susceptibles d'apparaître en tant que défaut de répartition de matière, les minces. La région d'inspection **7** s'étend ainsi selon une surface bidimensionnelle. Par exemple, la région d'inspection **7** correspondant au jable ou à l'épaule du récipient. La région d'inspection **7** s'étend sur toute la circonférence du récipient, selon une hauteur comprise entre 0,5 et 50 mm et de préférence de l'ordre de 20 mm.

L'installation **1** comporte une source lumineuse **8** adaptée pour envoyer un faisceau lumineux **9** sur la paroi **3** du récipient sous la forme d'une ligne lumineuse **L** ayant une longueur déterminée selon la hauteur du récipient prise selon l'axe central **A.** Par exemple, la source lumineuse **8** est un laser. Selon une caractéristique avantageuse de l'invention, la longueur de la ligne lumineuse **L** prise selon l'axe central **A** correspond au moins à la hauteur de la région d'inspection **7.**

Le faisceau lumineux **9** est envoyé suivant un angle tel qu'une partie **11** du faisceau lumineux **9** est réfléchie par la face extérieure **5** et qu'une partie **12** du faisceau **9** est réfractée dans la paroi **3** puis réfléchie par la face intérieure **6** de la paroi. Tel que cela ressort plus précisément de la **Fig. 2****,** l'envoi du faisceau lumineux **9** conduit à l'obtention d'un faisceau réfléchi **11** par la face extérieure **5** et un faisceau réfléchi **12** par la face intérieure **6.**

L'installation comporte également un capteur de lumière **16** apte à récupérer les faisceaux réfléchis **11, 12** par les faces respectivement extérieure **5** et intérieure **6.** Le capteur de lumière **16** est avantageusement une caméra matricielle permettant d'acquérir une image bidimensionnelle de la région d'inspection **7.** La caméra **16** est reliée à une unité **17** d'acquisition et de traitement permettant d'acquérir et de traiter les images prises par la caméra. La caméra **16** et l'unité d'acquisition et de traitement **17** ne sont pas décrits plus précisément car ils sont bien connus de l'homme du métier.

L'installation d'inspection **1** comporte également un système **18** de déplacement relatif des récipients **2**, par rapport au capteur de lumière **16** de manière à permettre l'inspection des récipients selon toute sa circonférence, par la prise d'images successives lors du déplacement relatif des récipients. Selon une variante avantageuse de réalisation, le système de déplacement **18** assure la mise en rotation des récipients autour de son axe central **A** sur un tour. Dans le cas d'un récipient de forme, c'est-à-dire ne présentant pas une forme générale cylindrique, l'inspection est réalisée sur tout le pourtour ou le périmètre du récipient.

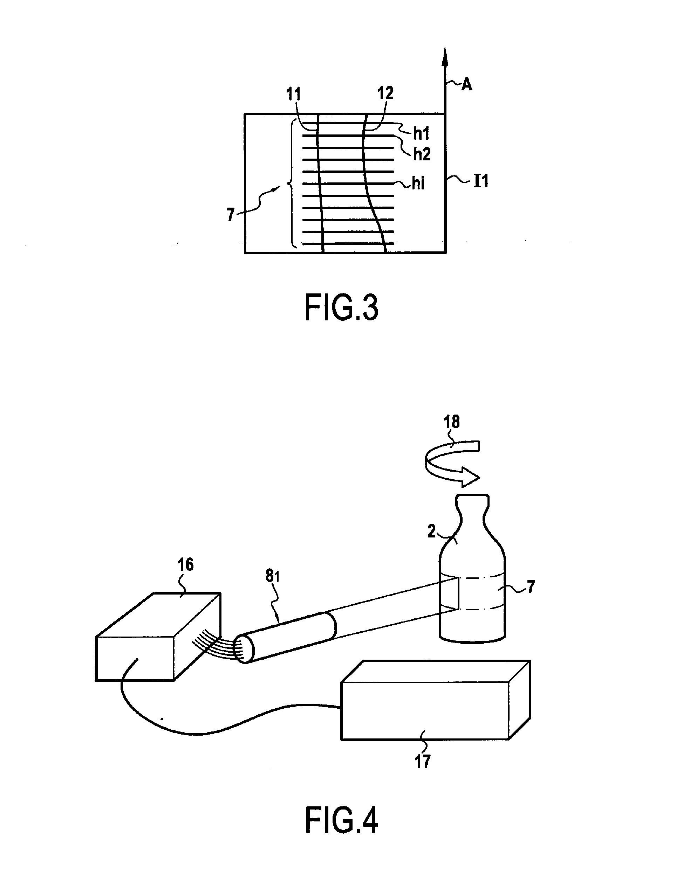

La **Fig. 3** illustre un exemple d'une image **I₁** prise par la caméra **16** pour une position angulaire déterminée du récipient par rapport à la caméra. L'image **I₁** fait apparaître d'une part l'image du faisceau réfléchi **11** par la face extérieure **5** de la paroi **3** et d'autre part, l'image du faisceau réfléchi **12** par la face intérieure **6** de la paroi **3.** Les images des faisceaux réfléchis **11, 12** apparaissent sur l'image **I₁** selon deux lignes lumineuses présentant une longueur selon l'axe central **A** correspondant à la hauteur de la région d'inspection **7** et écartées l'une de l'autre, selon une direction perpendiculaire à l'axe central **A,** d'une distance correspondant à l'épaisseur de la paroi **3.** L'unité d'acquisition et de traitement **17** est adaptée pour prendre des images successives de la paroi **3** du récipient **2** lors de la rotation du récipient **2** sur un tour. En d'autres termes, l'unité d'acquisition et de traitement **17** prend deux images successives pour un pas de rotation déterminé du récipient par exemple compris entre 0,5 et 5 mm et de préférence de l'ordre de 1 mm selon la circonférence du récipient.

Pour chaque image prise, l'unité d'acquisition et de traitement **17** choisit une série de niveaux ou de de points d'inspection **h₁, h₂,** ... **hₗ** distribués de manière superposée selon la hauteur déterminée du récipient prise selon l'axe central **A**.

Par exemple, il est prévu de choisir pour la région d'inspection **7,** entre 3 et 50 points d'inspection hᵢ selon la hauteur du récipient et de préférence autour de 20 points d'inspection, selon un pas d'inspection compris entre 0,02 et 5 mm et de préférence autour de 1 mm. Dans l'exemple illustré à la **Fig. 3****,** 11 points d'inspection **hᵢ** sont pris selon la hauteur du récipient dans la région d'inspection **7** égale à 20 mm. Pour chaque point d'inspection **hᵢ,** l'unité d'acquisition et de traitement **17** détermine l'épaisseur de la paroi **3** en fonction de la séparation au niveau de l'image **I₁,** entre les faisceaux réfléchis **11, 12** par les faces intérieure **6** et extérieure **5.** En d'autres termes, pour chaque niveau **hᵢ** l'épaisseur de la paroi **3** est déterminée. Dans l'exemple illustré à la **Fig. 3****,** 11 épaisseurs sont ainsi déterminées dans l'image **I₁** correspondant à chaque hauteur ou niveau **hᵢ.**

Cette opération de détermination des épaisseurs de la paroi **3** dans une image est répétée sur les différentes images prises selon toute la circonférence du récipient **2.** A cet effet, le récipient **2** est mis en rotation autour de son axe central **A** sur un tour. A chaque pas d'incrémentation de déplacement, à savoir de rotation dans l'exemple illustré, du récipient **2,** l'unité d'acquisition et de traitement **17** prend une image et détermine les épaisseurs de la paroi **3** selon les différents points ou niveau d'inspection **hᵢ** choisis. Avantageusement, le nombre et la position des points d'inspection restent identiques d'une image à l'autre. Dans l'exemple illustré, pour chaque décalage angulaire par exemple de 1 mm, l'unité d'acquisition et de traitement **17** procède à la mesure de l'épaisseur de la région d'inspection **7,** selon les 11 niveaux **hᵢ** déterminés.

La **Fig. 4** illustre une autre variante dans laquelle le faisceau lumineux **9** envoyé sur le récipient **2** présente un codage chromatique généré par au moins une sonde chromatique **8₁,** c'est-à-dire que le faisceau lumineux **9** possède différentes longueurs d'ondes de valeurs connues et sélectionnées, pour permettre une détection d'épaisseur de la paroi **3.**

Le faisceau lumineux **9** qui est formé par un ou plusieurs faisceaux élémentaires provenant d'une ou de plusieurs sondes chromatiques présente également une hauteur déterminée pour couvrir la surface du récipient dans la zone d'inspection **7** comme expliqué en relation des **Fig. 1** à **3****.** Le faisceau lumineux **9** est focalisé sur la paroi **3** de sorte que des faisceaux sont réfléchis sur les faces intérieure **6** et extérieure **5.** Les faisceaux réfléchis par les faces intérieure **6** et extérieure **5** sont récupérés par la sonde chromatique **8₁** et dirigés sur un capteur de lumière **16** tel un spectromètre permettant d'analyser les longueurs d'ondes des faisceaux réfléchis par les faces extérieure **5** et intérieure **6.** En fonction des longueurs d'ondes des faisceaux réfléchis, l'unité d'acquisition et de traitement **17** détermine l'épaisseur de la paroi **3** aux différents points d'inspection **hᵢ,** comme expliqué ci-dessus.

L'unité d'acquisition et de traitement **17** traite les mesures d'épaisseurs en recherchant si au moins l'une des mesures d'épaisseur déterminées aux divers points d'inspection **hᵢ** est inférieure à une valeur critique d'épaisseur minimale. Cette valeur critique d'épaisseur minimale correspond à la présence d'un mince. Dans le cas où au moins une mesure d'épaisseur est inférieure à la valeur critique d'épaisseur minimale, l'unité d'acquisition et de traitement **17** délivre un signal de défaut permettant de signaler le récipient comme défectueux.

Selon une caractéristique avantageuse de réalisation, l'unité d'acquisition et de traitement **17** traite les mesures d'épaisseur en analysant la distribution des mesures d'épaisseur inférieures à une valeur critique d'épaisseur, pour déterminer si le récipient présente un mince comme défaut de répartition de matière. La prise en compte des mesures d'épaisseurs selon les deux directions de la surface de la paroi **3** donne une indication supplémentaire sur la forme du défaut constaté.

Selon une caractéristique de l'invention, les mesures d'épaisseur sont traitées en analysant leur distribution sur la région d'inspection **7** pour en extraire des caractéristiques géométriques telles que par exemple, la surface, la longueur, la largeur, l'orientation, la rectitude, l'amplitude et/ou la pente. En effet, chaque type de défauts de répartition de matière, outre le mince, et tel que le bouillon de formage, le joint de moule décalé, le picot (...) possède une « signature géométrique ».

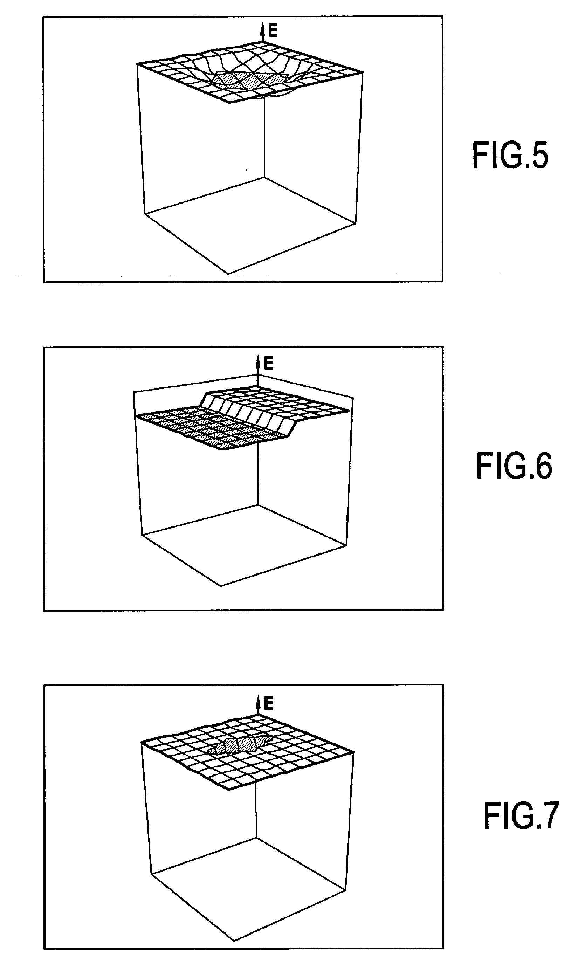

Les **Fig. 5** à **7** illustrent trois exemples de distribution de mesures d'épaisseur E dans la région d'inspection **7** possédant chacune une signature géométrique caractéristique d'un type de défaut de répartition de matière.

La **Fig. 5** illustre un défaut de mauvaise répartition d'épaisseur, lié à un problème de formage du récipient. La prise en compte des caractéristiques géométriques des mesures d'épaisseur **E** en particulier, celles inférieures à une valeur critique d'épaisseur, permet de caractériser la présence d'un défaut de type mince.

La **Fig. 6** illustre un défaut de type joint de moule décalé dont la signature géométrique apparaît dans l'orientation et/ou la rectitude de la distribution des mesures d'épaisseur **E.**

La **Fig. 7** illustre un défaut de type bouillon dont la signature géométrique est caractérisée par une variation localisée et rapide de la distribution des mesures d'épaisseur **E.**

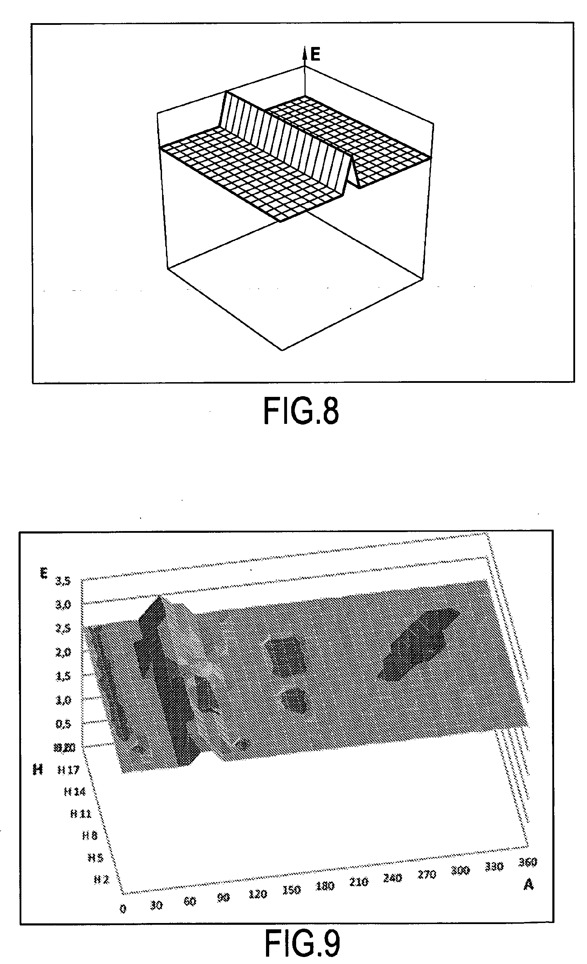

La **Fig. 8** illustre un défaut de type ailette dont la signature géométrique est caractérisée par une variation localisée rapide et continue de la distribution des mesures d'épaisseur **E.**

La **Fig. 9** illustre un exemple de distribution de mesures d'épaisseurs **E** (mm) sur une hauteur **H** (mm) déterminée et selon toute la périphérie **A**(°) du récipient.

Les caractéristiques géométriques extraites de la distribution des mesures d'épaisseur sont comparées avec des valeurs de référence correspondant à différents types de défauts de répartition de matière connus ou répertoriés. Une telle comparaison permet de déterminer si le récipient présente de manière fiable un défaut de répartition de matière. Selon une variante de réalisation, une telle comparaison permet d'identifier le type de défaut de répartition de matière que présente le récipient. Une telle identification du type de défaut de répartition de matière permet de remonter aux causes ayant engendré ce défaut en vue d'y remédier.

Pour améliorer la détection du type de défaut, l'unité d'acquisition et de traitement **17** peut prendre en compte également les profils relatifs des faces extérieure **5** et intérieure **6** à partir des images des faisceaux réfléchis **11, 12** apparaissant sur les images prises par la caméra **16.**

L'objet de l'invention permet ainsi de détecter à coup sûr, l'existence d'un mince en le distinguant des autres défauts de répartition de matière. Avantageusement, cette détection est réalisée dans une région localisée s'étendant sur une surface du récipient englobant toute la zone dans laquelle un mince est susceptible de se former. Bien entendu, il peut être envisagé d'inspecter simultanément plusieurs zones d'un même récipient.

Un autre avantage de l'invention est de permettre lors de l'analyse des signaux délivrés par le capteur de lumière **16,** de les filtrer selon les deux directions et d'appliquer des algorithmes et des filtres de traitement d'images deux dimensions afin de détecter les images des faisceaux réfléchis **11, 12** (**Fig. 3**). Une telle opération de filtrage permet par exemple de corriger les aléas du signal dus à des imperfections de la surface du récipient.

Ainsi, selon une variante avantageuse de réalisation, l'opération de filtrage peut être réalisée selon la direction de mesure de l'épaisseur.

A cet égard, il est à noter que l'abscisse de l'image illustrée à la **Fig. 3** correspond dans le cas d'un procédé de mesure reposant sur la triangulation, à l'abscisse du capteur de lumière linéaire ou matriciel. Cette abscisse dépend de la déviation des rayons réfléchis sur les faces intérieure et extérieure. La distance entre les rayons réfléchis sur les deux faces et donc leur écart d'abscisse permet de déterminer l'épaisseur. La **Fig. 3** peut être considérée comme une image matricielle même lorsque le capteur de lumière est un ensemble de capteurs d'images linéaires superposés.

Dans le cas d'un procédé de mesure basé sur le codage chromatique (**Fig. 4**), l'abscisse de l'image illustrée à la **Fig. 3** correspond à une longueur d'onde. Le principe de la mesure est en effet un codage chromatique obtenu en focalisant une multitude de sources ponctuelles polychromatiques (ou une fente) au moyen d'un objectif fortement chromatique. Les faisceaux réfléchis sur les faces intérieure et extérieure ne sont pas de la même couleur dominante. Après un filtrage de type trou d'épingle ou fente, un monochromateur répartit horizontalement les faisceaux sur une série de capteurs linéaires superposés ou bien un capteur matriciel. La **Fig. 3** représente donc un aspect très similaire avec le système en triangulation, considérant que les abscisses sont des longueurs d'onde.

Bien entendu, à toutes les étapes de l'analyse, il apparaît possible de filtrer, interpoler ou corriger les signaux délivrés par le capteur de lumière **16** selon la direction verticale et/ou horizontale du capteur de lumière, et/ou dans le temps. L'acquisition des signaux délivrés par le capteur de lumière étant effectuée pour chaque incrément de rotation du récipient, le filtrage selon le temps revient à un filtrage selon l'angle de rotation, c'est-à-dire selon la circonférence du récipient.

L'invention n'est pas limitée aux exemples décrits et représentés car diverses modifications peuvent y être apportées sans sortir de son cadre.

## Revendications

1. Procédé d'inspection pour déceler des défauts de répartition de matière dans des récipients transparents (**2**) ayant un axe central (**A**) et une paroi (**3**) délimitée entre une face extérieure (**5**) et une face intérieure (**6**), le procédé consistant pour une série de points d'inspection (hi) distribués sur une région d'inspection (**7**) d'une part de manière superposée selon une hauteur déterminée du récipient prise selon l'axe central (**A**), et d'autre part selon la circonférence du récipient :
- à envoyer au moins un faisceau lumineux (**9**) sur la paroi du récipient suivant un angle tel qu'une partie (**11**) du faisceau lumineux est réfléchie par la face extérieure (**5**) de la paroi et qu'une partie (**12**) du faisceau est réfractée dans la paroi puis réfléchie par la face intérieure (**6**) de la paroi,
- à récupérer sur un capteur de lumière (**16**), les faisceaux réfléchis (**12, 11**) par les faces intérieure (**6**) et extérieure (**5**),
- à mesurer en chaque point d'inspection (**hᵢ**), l'épaisseur de la paroi (**3**) en fonction de la séparation au niveau du capteur de lumière (**16**), entre les faisceaux réfléchis par les faces intérieure et extérieure,
**caractérisé en ce qu'**il consiste :
- à récupérer les faisceaux réfléchis (**12, 11**) par les faces extérieure (**5**) et intérieure (**6**), à l'aide en tant que capteur de lumière (**16**), d'une caméra matricielle adaptée pour acquérir une image bidimensionnelle à partir de laquelle les mesures d'épaisseurs en différents points (**hᵢ**) sont réalisées,
- à traiter les mesures d'épaisseurs en analysant leur distribution sur la région d'inspection (**7**) pour en extraire des caractéristiques géométriques, et à comparer ces caractéristiques géométriques extraites des mesures d'épaisseur avec des valeurs de référence correspondant à différents types de défaut de répartition de matière afin de déterminer le type de défaut de répartition de matière que présente le récipient.

2. Procédé d'inspection selon la revendication 1, **caractérisé en ce qu'**il consiste à prendre en compte comme caractéristiques géométriques de distribution des mesures d'épaisseur, la surface, la longueur, la largeur, l'orientation, la rectitude, l'amplitude et/ou la pente.

3. Procédé d'inspection selon la revendication 2, **caractérisé en ce qu'**il consiste à prendre en compte les caractéristiques géométriques des mesures d'épaisseur inférieures à une valeur critique d'épaisseur, pour caractériser la présence d'un défaut de type mince.

4. Procédé d'inspection selon la revendication 2, **caractérisé en ce qu'**il consiste à prendre en compte l'orientation et/ou la rectitude de la distribution des mesures d'épaisseur pour caractériser la présence d'un défaut de type joint de moule décalé.

5. Procédé d'inspection selon la revendication 2, **caractérisé en ce qu'**il consiste à prendre en compte l'orientation de la distribution des mesures d'épaisseur pour caractériser un défaut de type bouillon par une variation localisée et rapide de ladite distribution des mesures d'épaisseur.

6. Procédé d'inspection selon la revendication 1, **caractérisé en ce qu'**il consiste à réaliser l'inspection pour une série de points d'inspection (**hᵢ**) :
- en envoyant un faisceau lumineux (**9**) sous la forme d'une ligne lumineuse ayant une longueur déterminée selon la hauteur du récipient prise selon l'axe vertical (**A**),
- en choisissant une série de points d'inspection (**hᵢ**) selon la hauteur du récipient prise selon l'axe vertical (**A**), de manière pour chacun d'eux, à récupérer les faisceaux réfléchis par les faces intérieure (**6**) et extérieure (**5**) et à mesurer l'épaisseur de la paroi,
- en déplaçant relativement par rapport au capteur de lumière (**16**) le récipient (**2**) sur un tour,
- et en choisissant un pas d'incrémentation de déplacement relatif du récipient (**2**), de manière que pour chaque pas d'incrémentation de déplacement, à renouveler les opérations visant à déterminer l'épaisseur de la paroi (**3**) en différents points d'inspection (**hᵢ**) selon la hauteur du récipient.

7. Procédé d'inspection selon l'une des revendications 1 à 6, **caractérisé en ce qu'**il consiste à choisir entre 3 et 50 points d'inspection (**hᵢ**) selon la hauteur du récipient et de préférence autour de 20 points d'inspection, selon un pas d'inspection compris entre 0,02 et 5 mm et de préférence autour de 1 mm selon la hauteur du récipient, avec un pas d'incrémentation compris entre 0,5 et 5 mm et de préférence de l'ordre de 1 mm selon la circonférence du récipient.

8. Procédé d'inspection selon l'une des revendications 1 à 7, **caractérisé en ce qu'**il consiste à choisir les points d'inspection (**hᵢ**) selon la hauteur du récipient correspondant à une zone d'inspection (**7**) afin de couvrir au moins une zone de raccordement de la paroi (**3**) présentant des rayons de courbure différents tels que l'épaule ou le jable du récipient.

9. Procédé d'inspection selon l'une des revendications 1 à 8, **caractérisé en ce qu'**il consiste à filtrer, interpoler ou corriger les signaux délivrés par le capteur de lumière (**16**) selon la direction verticale et/ou horizontale du capteur de lumière et/ou dans le temps.

10. Installation d'inspection pour déceler des défauts de répartition de matière dans des récipients transparents (**2**) ayant un axe central (**A**) et une paroi (**3**) délimitée entre une face extérieure (**5**) et une face intérieure (**6**), pour la mise en oeuvre du procédé conforme à l'une des revendications 1 à 9, **caractérisée en ce que** l'installation comporte :
- une source lumineuse (**8**) pour envoyer un faisceau lumineux (**9**) sur la paroi (**3**) du récipient, sous la forme d'une ligne lumineuse (**L**) ayant une longueur déterminée selon la hauteur du récipient prise selon l'axe central (**A**), le faisceau lumineux étant envoyé suivant un angle tel qu'une partie du faisceau lumineux est réfléchie par la face extérieure de la paroi et qu'une partie du faisceau est réfractée dans la paroi puis réfléchie par la face intérieure de la paroi,
- un capteur de lumière (**16**) apte à récupérer les faisceaux réfléchis par les faces intérieure (**6**) et extérieure (**5**), le capteur de lumière (**16**) étant une caméra matricielle et de traitement assurant l'acquisition d'images tridimensionnelles,
- un système (**18**) de déplacement relatif par rapport au capteur de lumière (**16**) des récipients,
- une unité d'acquisition et de traitement (**17**) reliée au capteur de lumière (**16**) comportant des moyens :
• pour choisir une série de points d'inspection (**hᵢ**) distribués d'une part de manière superposée selon une hauteur déterminée du récipient prise selon l'axe central (**A**), et d'autre part selon la circonférence du récipient,
• pour mesurer en chaque point d'inspection (**hᵢ**), l'épaisseur de la paroi en fonction de la séparation au niveau du capteur de lumière (**16**), entre les faisceaux réfléchis par les faces intérieure (**6**) et extérieure (**5**),
• pour traiter les mesures d'épaisseur en analysant leur distribution sur la région d'inspection (**7**) pour en extraire des caractéristiques géométriques, pour comparer ces caractéristiques géométriques à des valeurs de référence correspondant à différents types de défauts de répartiton de matière pour déterminer le type de défaut de répartition de matière que présente le récipient.

## Patentansprüche

1. Verfahren zur Erkennung von Defekten der Materialverteilung in transparenten Behältern (2), die eine zentrale Achse (A) und eine Wand (3) aufweisen, die zwischen einer Außenseite (5) und einer Innenseite (6) begrenzt ist, wobei das Verfahren für eine Reihe von Kontrollpunkten (hᵢ), die in einem Kontrollbereich (7) einerseits nach einer bestimmten Höhe des Behälters, die entlang der Mittelachse (A) erreicht ist, und andererseits nach dem Umfang des Behälters überlagert verteilt sind, darin besteht:
- mindestens einen Lichtstrahl (9) in einem derartigen Winkel auf die Wand des Behälters zu schicken, dass ein Teil (11) des Lichtstrahls von der Außenseite (5) der Wand reflektiert wird und dass ein Teil (12) des Strahls in der Wand gebrochen und dann von der Innenseite (6) der Wand reflektiert wird,
- auf einem Lichtsensor (16) die Lichtstrahlen (12, 11) aufzufangen, die durch die Innenseite (6) und die Außenseite (5) reflektiert werden,
- an jedem Kontrollpunkt (hᵢ) die Dicke der Wand (3) in Abhängigkeit von der Trennung am Lichtsensor (16) zwischen den Strahlen, die von der Innenseite und der Außenseite reflektiert werden, zu messen,
**dadurch gekennzeichnet, dass** es darin besteht:
- die Lichtstrahlen (12, 11), die von der Außenseite (5) und der Innenseite (6) reflektiert werden, mit Hilfe einer Matrix-Kamera als Lichtsensor (16) aufzufangen, die geeignet ist, ein zweidimensionales Bild aufzunehmen, von dem die Messungen der Dicken an verschiedenen Punkten (hᵢ) durchgeführt werden,
- die Messungen der Dicken zu bearbeiten, indem ihre Verteilung auf dem Kontrollbereich (7) analysiert wird, um daraus die geometrischen Eigenschaften zu entnehmen, und diese geometrischen Eigenschaften, die von den Messungen der Dicken entnommen sind, mit Referenzwerten zu vergleichen, die verschiedenen Arten von Defekten der Materialverteilung entsprechen, um die Art des Defektes der Materialverteilung zu bestimmen, die dieser Behälter aufweist.

2. Verfahren zur Erkennung nach Anspruch 1, **dadurch gekennzeichnet, dass** es darin besteht, als geometrische Eigenschaften der Verteilung der Messungen der Dicke die Oberfläche, die Länge, die Breite, die Ausrichtung, die Geradheit, die die Amplitude und/oder die Neigung zu berücksichtigen.

3. Verfahren zur Erkennung nach Anspruch 2, **dadurch gekennzeichnet, dass** es darin besteht, die geometrischen Eigenschaften der Messungen der Dicke zu berücksichtigen, die niedriger als ein kritischer Wert der Dicke sind, um das Vorhandensein eines Defekts der Dünnheit zu charakterisieren.

4. Verfahren zur Erkennung nach Anspruch 2, **dadurch gekennzeichnet, dass** es darin besteht, die Ausrichtung und/oder die Geradheit der Verteilung der Messungen der Dicke zu berücksichtigen, um das Vorhandensein eines Defekts des Typs der verschobenen Dichtung der Gussform zu charakterisieren.

5. Verfahren zur Erkennung nach Anspruch 2, **dadurch gekennzeichnet, dass** es darin besteht, die Ausrichtung der Verteilung der Messungen der Dicke zu berücksichtigen, um einen Defekt der Typs der Blasenbildung durch eine lokalisierte und rasche Änderung der Verteilung der Messungen der Dicke zu charakterisieren.

6. Verfahren zur Erkennung nach Anspruch 1, **dadurch gekennzeichnet, dass** es darin besteht, die Inspektion für eine Reihe von Kontrollpunkten (hᵢ) durchzuführen:
- indem ein Lichtstrahl (9) in Form von einer Lichtlinie geschickt wird, die eine Länge aufweist, die nach der Höhe des Behälters bestimmt ist, die entlang der vertikalen Achse (A) erreicht ist,
- indem eine Reihe von Kontrollpunkten (hᵢ) nach der Höhe des Behälters gewählt wird, die entlang der vertikalen Achse (A) erreicht ist, um für jeden davon die Lichtstrahlen aufzufangen, die von der Innenseite (6) und der Außenseite (5) reflektiert werden, und um die Dicke der Wand zu messen,
- indem der Behälter (2) relativ in Bezug auf den Lichtsensor (16) um eine Umdrehung verschoben wird,
- und indem ein Abstand des Inkrementierens der relativen Verschiebung des Behälters (2) gewählt wird, so dass für jeden Abstand des Inkrementierens der Verschiebung die Vorgänge zum Ermitteln der Dicke der Wand (3) an verschiedenen Kontrollpunkten (hᵢ) je nach der Höhe des Behälters wiederholt werden.

7. Verfahren zur Erkennung nach einem der Ansprüche 1 bis 6, **dadurch gekennzeichnet, dass** es darin besteht, zwischen 3 und 50 Kontrollpunkten (hᵢ) je nach der Höhe des Behälters und vorzugsweise um die 20 Kontrollpunkte je nach einem Kontrollabstand zwischen 0,02 und 5 mm und vorzugsweise um die 1 mm je nach der Höhe des Behälters mit einem Abstand des Inkrementierens zwischen 0,5 und 5 mm und vorzugsweise in der Größenordnung von etwa 1 mm je nach dem Umfang des Behälters zu wählen.

8. Verfahren zur Erkennung nach einem der Ansprüche 1 bis 7, **dadurch gekennzeichnet, dass** es darin besteht, die Kontrollpunkte (hᵢ) je nach der Höhe des Behälters zu wählen, die einem Kontrollbereich (7) entspricht, um mindestens einen Anschlussbereich der Wand (3), der unterschiedliche Krümmungsradien aufweist, wie die Schulter oder die Bodennaht des Behälters, abzudecken.

9. Verfahren zur Erkennung nach einem der Ansprüche 1 bis 8, **dadurch gekennzeichnet, dass** es darin besteht, die Signale, die von dem Lichtsensor (16) geliefert sind, je nach der vertikalen und/oder horizontalen Richtung des Lichtsensors und/oder im Laufe der Zeit zu filtern, zu interpolieren oder zu korrigieren.

10. Vorrichtung zur Erkennung von Defekten der Materialverteilung in transparenten Behältern (2), die eine zentrale Achse (A) und eine Wand (3) aufweisen, die zwischen einer Außenseite (5) und einer Innenseite (6) begrenzt ist, um das Verfahrens nach einem der Ansprüche 1 bis 9 umzusetzen, **dadurch gekennzeichnet, dass** die Vorrichtung umfasst:
- eine Lichtquelle (8), um auf die Wand (3) des Behälters einen Lichtstrahl (9) in Form von einer Lichtlinie (L) zu schicken, die eine Länge aufweist, die nach der Höhe des Behälters bestimmt ist, die entlang der vertikalen Achse (A) erreicht ist, wobei der Lichtstrahl in einem derartigen Winkel auf die Wand des Behälters geschickt ist, dass ein Teil des Lichtstrahls von der Außenseite der Wand reflektiert wird und ein Teil des Strahls in der Wand gebrochen und dann von der Innenseite der Wand reflektiert wird,
- einen Lichtsensor (16), der geeignet ist, die Lichtstrahlen, die von der Innenseite (5) und der Außenseite (6) reflektiert werden, aufzufangen, wobei der Lichtsensor (16) eine Matrix-Kamera ist und die Aufnahme von zweidimensionalen Bildern garantiert,
- ein System (18) der relativen Verschiebung der Behälter gegenüber dem Lichtsensor (16),
- eine Erfassungs- und Verarbeitungseinheit (17), die mit dem Lichtsensor (16) verbunden ist, und Mittel umfasst:
• um eine Reihe von Kontrollpunkten (hᵢ) zu wählen, die einerseits nach einer bestimmten Höhe des Behälters, die entlang der Mittelachse (A) erreicht ist, und andererseits nach dem Umfang des Behälters überlagert verteilt sind,
• um an jedem Kontrollpunkt (hᵢ) die Dicke der Wand in Abhängigkeit von der Trennung am Lichtsensor (16) zwischen den Strahlen, die von der Innenseite (6) und der Außenseite (5) reflektiert werden, zu messen,
• um die Messungen der Dicken zu bearbeiten, indem ihre Verteilung auf dem Kontrollbereich (7) analysiert wird, um daraus die geometrischen Eigenschaften zu entnehmen, um diese geometrischen Eigenschaften mit Referenzwerten zu vergleichen, die verschiedenen Arten von Defekten der Materialverteilung entsprechen, um die Art des Defektes der Materialverteilung zu bestimmen, die dieser Behälter aufweist.

## Claims

1. An inspection process for detecting material distribution defects in transparent containers (**2**) having a central axis (**A**) and a wall (**3**) delimited between an external face (**5**) and an internal face (**6**), the process consisting for a series of inspection points distributed over an inspection region (**7**) on the one hand superposed according to a determined height of the container taken according to the central axis (**A**), and on the other hand according to the circumference of the container:
- sending at least one light beam (**9**) to the wall of the container following an angle such that part (**11**) of the light beam is reflected by the external face (**5**) of the wall and part (**12**) of the beam is refracted in the wall then reflected by the internal face (**6**) of the wall,
- recovering on a light sensor (**16**) the reflected beams (**12, 11**) by the internal (**6**) and external (**5**) faces,
- measuring at each inspection point (**hᵢ**) the thickness of the wall (**3**) as a function of separation at the level of the light sensor (**16**) between the reflected beams by the internal and external faces,
**characterised in that** it consists of:
- recovering the reflected beams (**12, 11**) by the external (**5**) and internal (**6**) faces by means of, as a light sensor (**16**), a matrix camera adapted to acquire a bidimensional image from which the thickness measurements at different points (hi) are made.
- processing the thickness measurements by analysing their distribution over the inspection region (**7**) to extract therefrom geometric characteristics, and comparing these geometric characteristics extracted from the thickness measurements to reference values corresponding to different types of material distribution defect to determine the type of material distribution defect presented by the container.

2. The inspection process as claimed in Claim 1, **characterised in that** it consists of taking into account as geometric distribution characteristics of the thickness measurements, the surface, the length, the width, the orientation, the correctness, the amplitude and/or the slope.

3. The inspection process as claimed in Claim 2, **characterised in that** it consists of taking into account the geometric characteristics of the thickness measurements less than a critical thickness value to characterise the presence of a defect of thin type.

4. The inspection process as claimed in Claim 2, **characterised in that** it consists of taking into account the orientation and/or the correctness of the distribution of the thickness measurements to characterise the presence of a defect of offset parting line type.

5. The inspection process as claimed in Claim 2, **characterised in that** it consists of taking into account the orientation of the distribution of the thickness measurements to characterise a defect of bubble type by localised and rapid variation of said distribution of the thickness measurements.

6. The inspection process as claimed in Claim 1, **characterised in that** it consists of conducting the inspection for a series of inspection points (hᵢ):
- by sending a light beam (**9**) in the form of a luminous line having a length determined according to the height of the container taken according to the vertical axis (**A**),
- by selecting a series of inspection points (**hᵢ**) according to the height of the container taken according to the vertical axis (**A**), so as for each of them to recover the reflected beams by the internal (**6**) and external (**5**) faces and measuring the thickness of the wall,
- by displacing relatively relative to the light sensor (**16**) the container (**2**) on one turn,
- and by selecting a relative displacement incrementation pitch of the container (**2**) such as for each displacement incrementation pitch, for renewing operations aiming to determine the thickness of the wall (**3**) at different inspection points (**hᵢ**) according to the height of the container.

7. The inspection process as claimed in any one of Claims 1 to 6, **characterised in that** it consists of selecting between 3 and 50 inspection points (**hᵢ**) according to the height of the container and preferably about 20 inspection points, according to an inspection pitch of between 0.02 and 5 mm and preferably about 1 mm according to the height of the container, with an incrementation pitch of between 0.5 and 5 mm and preferably of the order of 1 mm according to the circumference of the container.

8. The inspection process as claimed in any one of Claims 1 to 7, **characterised in that** it consists of selecting the inspection points (**hᵢ**) according to the height of the container corresponding to an inspection zone (**7**) to cover at least one connection zone of the wall (**3**) having different radii of curvature such as the shoulder or the heel of the container.

9. The inspection process as claimed in any one of Claims 1 to 8, **characterised in that** it consists of filtering, interpolating or correcting the signals delivered by the light sensor (**16**) according to the vertical and/or horizontal direction of the light sensor and/or over time.

10. Inspection installation for detecting material distribution defects in transparent containers (**2**) having a central axis (**A**) and a wall (**3**) delimited between an external face (**5**) and an internal face (**6**), for executing the process as claimed in any one of Claims 1 to 9, **characterised in that** the installation comprises:
- a light source (**8**) for sending a light beam (**9**) to the wall (**3**) of the container, in the form of a luminous line (**L**) having a length determined according to the height of the container taken according to the central axis (**A**), the light beam being sent according to an angle such that part of the light beam is reflected by the external face of the wall and part of the beam is refracted in the wall then reflected by the internal face of the wall,
- a light sensor (**16**) capable of recovering the reflected beams by the internal (**6**) and external (**5**) faces, the light sensor (**16**) being a matrix camera connected to the acquisition and processing unit which ensures the acquisition of bidimensional images
- a relative displacement system (**18**) relative to the light sensor (**16**) of the containers,
- an acquisition and processing unit (**17**) connected to the light sensor (**16**) comprising means:
• for selecting a series of inspection points (**hᵢ**) distributed on the one hand superposed according to a determined height of the container taken according to the central axis (**A**), and on the other hand according to the circumference of the container,
• for measuring at each inspection point (**hᵢ**) the thickness of the wall as a function of separation at the level of the light sensor (**16**) between the reflected beams by the internal (**6**) and external (**5**) faces,
• for processing the thickness measurements by analysing their distribution over the inspection region (**7**) to extract therefrom geometric characteristics, to compare these geometric characteristics to reference values corresponding to different types of material distribution defects to determine the type of material distribution defect presented by the container.
